# EUROPÄISCHE PATENTANMELDUNG

(11) **EP 3 461 081 A1**
(43) Veröffentlichungstag der Anmeldung: **27.03.2019**
(21) Anmeldenummer: 17192535.7
(22) Anmeldetag: 22.09.2017
(51) Int. Cl.: H04L 12/753, H04L 12/707, H04L 12/40

(54) **VERFAHREN ZUM BETRIEB EINES MEHRERE KOMMUNIKATIONSGERÄTE UMFASSENDEN KOMMUNIKATIONSNETZES EINES INDUSTRIELLEN AUTOMATISIERUNGSSYSTEMS, STEUERUNGSEINHEIT UND KOMMUNIKATIONSGERÄT**

(71) Anmelder: Siemens Aktiengesellschaft, 80333 München (DE)
(72) Erfinder: SAKIC, Ermin, 81379 München (DE)

(57) **Zusammenfassung**

In einem Kommunikationsnetz eines industriellen Automatisierungssystems steuern mehrere Steuerungseinheiten (101, 102) Funktionen mehrerer Kommunikationsgeräte (200). Die Kommunikationsgeräte (200) erstellen bei einem Start des Betriebs des Kommunikationsnetzes anhand von Absender-Adressen empfangener Datagramme jeweils selbständig Weiterleitungsregeln und bauen entsprechend einem Spannbann-Protokoll schleifenfreie Sicherungsschicht-Verbindungen auf. Die Steuerungseinheiten (101, 102) übermitteln vorgegebene Weiterleitungsregeln an zugeordneten Kommunikationsgeräte (200). Danach leiten die Kommunikationsgeräte (200) empfangene Datagramme nur entsprechend den vorgegebenen Weiterleitungsregeln weiter. Nach Aufbau von Kommunikationsverbindungen zwischen jeweils zueinander redundanten Steuerungseinheiten (101, 102) wird eine Verwendung des Spannbaum-Protokolls beendet.

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Software Defined Networking (SDN) zielt auf eine Virtualisierung von Kommunikationsnetzfunktionen ab, indem Kommunikationsgeräte wie Router oder Switche funktionell in Control Plane und Data Plane zugeordnete Komponenten unterteilt werden. Die Data Plane umfasst Funktionen bzw. Komponenten zur Weiterleitung von Datenpaketen bzw. -rahmen. Die Control Plane umfasst hingegen Management-Funktionen zur Steuerung der Weiterleitung bzw. der Komponenten der Data Plane. Mit OpenFlow ist beispielsweise ein Standard für Software-implementierte Control Planes definiert. Eine Abstraktion von Hardware als virtuelle Services ermöglicht einen Verzicht auf eine manuelle Konfiguration der Hardware, insbesondere indem eine programmierbare, zentrale Steuerung von Netzverkehr geschaffen wird. OpenFlow unterstützt eine Partitionierung von System-Ressourcen in Network Slices, durch die unabhängig von anderen bestehenden Network Slices eine Bereitstellung definierter System-Ressourcen gewährleistet wird.

Aus US 2013/268686 A1 ist ein Verfahren zum Senden einer Anforderung eines Verbindungsaufbaus bekannt, bei dem ein OpenFlow-Switch eine Nachricht mit einer Parameteranforderung an einen Konfigurationsserver sendet, um Verbindungsparameter von einem OpenFlow-Controller zu erhalten. Auf die Nachricht mit der Parameteranforderung empfängt der OpenFlow-Switch eine IP-Adresse und einen Satz von OpenFlow-Verbindungsparametern vom Konfigurationsserver, wobei der Satz von OpenFlow-Verbindungsparametern zumindest Verbindungsparameter eines ersten OpenFlow-Controllers umfasst. Der OpenFlow-Switch sendet entsprechend der IP-Adresse und dem Satz von OpenFlow-Verbindungsparametern des ersten OpenFlow-Controllers eine Nachricht mit einer Anforderung eines Verbindungsaufbaus an den ersten OpenFlow-Controller. Auf diese Weise kann ein automatischer Verbindungsaufbau zwischen einem OpenFlow-Switch und einem OpenFlow-Controller realisiert werden.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

In EP 2 795 842 B1 ist eine Steuerungseinheit zur Bereitstellung von Kommunikationsdiensten innerhalb eines physikalischen Kommunikationsnetzes beschrieben. Diese Kommunikationsdienste werden durch mehrere auf Kommunikationsgeräten ablaufende Anwendungen genutzt, für die jeweils Anforderungen an die Kommunikationsdienste spezifiziert sind. Durch die Steuerungseinheit wird ein Kommunikationsnetzmodell erzeugt, das eine Topologie des physikalischen Kommunikationsnetzes wiedergibt und für jedes Kommunikationsgerät ein Netzknotenmodell umfasst. Das Netzknotenmodell beschreibt Funktionen und Ressourcen des jeweiligen Kommunikationsgeräts. Außerdem berechnet die Steuerungseinheit für jede auf den Kommunikationsgeräten ablaufende Anwendung ein virtuelles Kommunikationsnetz, indem die Anforderungen der jeweiligen Anwendung an die Kommunikationsdienste auf das Kommunikationsnetzmodell abgebildet werden. Die berechneten virtuellen Kommunikationsnetze umfassen jeweils zumindest zwei durch ein Netzknotenmodell beschriebene Netzknoten und eine Partition bzw. Network Slice ausgewählter Kommunikationsnetzressourcen, die durch die Kommunikationsgeräte bereitgestellt werden.

WO 2016/206741 A1 betrifft ein Kommunikationsgerät für ein Software Defined Network, wobei das Kommunikationsgerät Steuerungsdaten mit einem Controller austauscht. Auf eine Anforderung des Kommunikationsgeräts übermittelt der Controller eine Information über eine eindeutige Kommunikationsadresse des Controllers an das Kommunikationsgerät. Diese Kommunikationsadresse wird für eine Übermittlung von Steuerungsdaten an den Controller in eine Gerätekonfiguration des Kommunikationsgeräts eingetragen.

In Software Defined Networks benötigen Kommunikationsgeräte, wie Router, Switches oder Access Points, eine Konfiguration durch einen zugeordneten Controller, um Entscheidungen treffen zu können, entlang welcher Pfade Datagramme, wie Datenpakete oder Frames, weiterzuleiten sind, oder wie Systemressourcen reserviert bzw. verwendet werden sollen. Bisher werden entsprechende Konfigurationsschritte für SDN-Kommunikationsgeräte noch zu einem großen Anteil manuell durchgeführt. Darüber hinaus müssen Kommunikationsgeräte zur Vermeidung von Broadcast-Stürmen während eines Bootstraping-Vorgangs zunächst selbständig eine Schleifenbildung innerhalb eines Kommunikationsnetzes verhindern. Durch entsprechende Maßnahmen zur Verhinderung der Schleifenbildung wird jedoch eine Topologie-Erkennung durch SDN-Controller stark behindert. Ohne eine vollständige Topologiesicht können SDN-Controller Pfadermittlungen innerhalb eines Kommunikationsnetzes nur eingeschränkt durchführen.

Der vorliegenden Erfindung liegt die Aufgabe zugrunde, ein Verfahren zum zuverlässigen Betrieb eines Kommunikationsnetzes für ein industrielles Automatisierungssystem anzugeben, das eine zuverlässigen Steuerung von Kommunikationsgerätefunktionen durch übergeordnete Steuerungseinheiten ermöglicht, sowie geeignete Vorrichtungen zur Durchführung des Verfahrens zu schaffen.

Diese Aufgabe wird erfindungsgemäß durch ein Verfahren mit den in Anspruch 1 genannten Merkmalen durch eine Steuerungseinheit mit den in Anspruch 14 angegebenen Merkmalen und durch ein Kommunikationsgerät mit den in Anspruch 15 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Betrieb eines mehrere Kommunikationsgeräte umfassenden Kommunikationsnetzes eines industriellen Automatisierungssystems steuern mehrere Steuerungseinheiten Funktionen mehrerer Kommunikationsgeräte. Dabei sind jedem Kommunikationsgerät jeweils zumindest zwei zueinander redundante Steuerungseinheiten zugeordnet. Jdem Kommunikationsgerät kann beispielsweise zumindest eine Haupt-Steuerungseinheit und eine Reserve-Steuerungseinheit zugeordnet sein. Die Kommunikationsgeräte erstellen bei einem Start des Betriebs des Kommunikationsnetzes, insbesondere im Rahmen eines Bootstrapping-Vorgangs, anhand von Absender-Adressen empfangener Datagramme jeweils selbständig Weiterleitungsregeln für weiterzuleitende Datagramme und bauen entsprechend einem Spannbann-Protokoll, insbesondere RSTP (Rapid Spanning Tree Protocol), untereinander schleifenfreie Sicherungsschicht-Verbindungen auf.

Die Absender-Adressen sind beispielsweise MAC-Adressen (Media Access Control). In entsprechender Weise sind die Sicherungsschicht-Verbindungen insbesondere logische Verbindungen innerhalb von OSI-Schicht 2, nicht aber TCP-Verbindungen (Transmission Control Protocol). Die durch die Kommunikationsgeräte selbständig erstellten Weiterleitungsregeln können insbesondere aus Einträgen in Quell-Adress-Tabellen (Source Address Tables) der Kommunikationsgeräte abgeleitet werden.

Nach Konfiguration der Kommunikationsgeräte mit jeweils einer Vermittlungsschicht-Adresse werden erfindungsgemäß Informationen über Adressen bzw. Namen, insbesondere IP-Adressen (Internet Protocol) bzw. DNS-Namen (Domain Name System), der zugeordneten Steuerungseinheiten an die Kommunikationsgeräte übermittelt. Die Konfiguration der Kommunikationsgeräte mit Vermittlungsschicht-Adressen kann beispielsweise mittels einer DHCP-Servereinheit (Dynamic Host Configuration Protocol) entsprechend DHCPv4 bzw. DHCPv6 oder selbständig durch die Kommunikationsgeräte mittels SLAAC (Stateless Address Autoconfiguration) auf Basis per Router Advertisements verteilter IPv6-Präfixe erfolgen. Insbesondere IPv4-basierte Vermittlungsschicht-Adressen werden vorzugsweise durch DHCP-Serverkomponenten der Steuerungseinheiten aus überlappungsfreien Steuerungseinheit-individuellen Adressbereichen an die Kommunikationsgeräte zugewiesen werden. Die übermittelten Informationen über Adressen bzw. Namen der zugeordneten Steuerungseinheiten werden vorteilhafterweise in Konfigurationsdaten der Kommunikationsgeräte gespeichert.

Die Kommunikationsgeräte bauen anhand der Adressen bzw. der Namen der zugeordneten Steuerungseinheiten jeweils Steuerungsverbindungen zu den zugeordneten Steuerungseinheiten auf. Die Steuerungsverbindungen sind vorzugsweise TCP-Verbindungen. Die Steuerungseinheiten übermitteln über die Steuerungsverbindungen vorgegebene Weiterleitungsregeln an die zugeordneten Kommunikationsgeräte. Die Kommunikationsgeräte leiten empfangene Datagramme infolge dessen nur entsprechend den vorgegebenen Weiterleitungsregeln weiter. Nach Aufbau von Kommunikationsverbindungen, insbesondere TCP-Verbindungen, zwischen jeweils zueinander redundanten Steuerungseinheiten wird eine Verwendung des Spannbaum-Protokolls zur Weiterleitung von Datagrammen beendet. Die Steuerungseinheiten ermitteln anschließend eine vollständige Topologie des Kommunikationsnetzes. Eine derartige Topologie-Erkennung kann beispielsweise mittels Link Layer Discovery Protocol (LLDP) bzw. entsprechend IEEE-802.1AB durchgeführt werden, insbesondere mittels LLDP-Agenten der Kommunikationsgeräte, die Informationen über das jeweilige Kommunikationsgerät an Nachbargeräte senden und von diesen ebenfalls entsprechende Informationen empfangen.

Die Steuerungseinheiten ermitteln erfindungsgemäß anhand der ermittelten Topologie Pfade zwischen den Kommunikationsgeräten und den zugeordneten Steuerungseinheiten sowie redundante Pfade zwischen den zueinander redundanten Steuerungseinheiten. Eine Ermittlung redundanter Pfade kann beispielsweise auf Grundlage des Dijkstra-Algorithmus, des Bellman-Ford-Algorithmus oder des Algorithmus von Floyd und Warshall erfolgen. Insbesondere können redundante Pfade mittels sukzessiver Anwendung von Dijkstra-Algorithmen mit Rand- bzw. Zwangsbedingungen (constrained Dijkstra's algorithm) ermittelt werden. Abschließend leiten die Steuerungseinheiten aus den ermittelten Pfaden aktualisierte Weiterleitungsregeln ab und übermitteln diese zur Anwendung an die zugeordneten Kommunikationsgeräte. Auf diese Weise kann ein Kommunikationsnetz mit durch Steuerungseinheiten gesteuerten Kommunikationsgeräten zuverlässig und effizient hochgefahren werden.

Entsprechend einer bevorzugten Ausgestaltung des erfindungsgemäßen Verfahrens sind die Kommunikationsgeräte einem Software Defined Network zugeordnet, das eine als Control Plane bezeichnete Kommunikationssteuerungsebene und eine als Data Plane bezeichnete Datenübermittlungsebene umfasst. Während die Steuerungseinheiten der Control Plane zugeordnet sind, sind die Kommunikationsgeräte der Data Plane zugeordnet. Darüber hinaus umfassen die Kommunikationsgeräte vorzugsweise Router bzw. Switches, und durch die Steuerungseinheiten können Flow-Tabellen vorgegeben werden, aus denen Routing-Tabellen bzw. Forwarding-Tabellen für die den Steuerungseinheiten zugeordneten Kommunikationsgeräte abgeleitet werden.

Vorzugsweise ermitteln die Steuerungseinheiten für Kommunikationsdienst-Anforderungen jeweils zumindest einen verfügbaren Pfad zwischen einem ersten Kommunikationsgerät an einem ersten Endknoten und einem zweiten Kommunikationsgerät an einem zweiten Endknoten über dritte Kommunikationsgeräte. Bei einem positiven Ermittlungsergebnis reservieren die Steuerungseinheiten für die Kommunikationsdienst-Anforderungen jeweils erforderliche Systemressourcen und steuern Routing- oder Switching-Funktionen der dritten Kommunikationsgeräte entsprechend den ermittelten Pfaden. Auf diese Weise können für Datenströme erforderliche Reservierungen aufwandsarm und sicher realisiert werden.

Entsprechend einer weiteren vorteilhaften Ausgestaltung des erfindungsgemäßen Verfahrens werden die vorgegebenen Weiterleitungsregeln zunächst aus den durch die Kommunikationsgeräte selbständig erstellten Weiterleitungsregeln abgeleitet. Auf diese Weise kann ein gleitender Übergang von einer selbständigen Erstellung von Weiterleitungsregeln durch die Kommunikationsgeräte zu einer expliziten Vorgabe der Weiterleitungsregeln realisiert werden. Dabei werden die über die Steuerungsverbindungen übermittelten Weiterleitungsregeln vorzugsweise durch die Steuerungseinheiten vorgegeben.

Zwischen Beendigung der Verwendung des Spannbaum-Protokolls zur Weiterleitung von Datagrammen und Übermittlung der aktualisierten Weiterleitungsregeln an die Kommunikationsgeräte erfolgt vorteilhafterweise keine Weiterleitung von Datagrammen durch die Kommunikationsgeräte entsprechend den vorgegebenen Weiterleitungsregeln. Damit können etwaige Broadcast-Stürme zwischen Beendigung der Verwendung des Spannbaum-Protokolls und Übermittlung der aktualisierten Weiterleitungsregeln vermieden werden. Darüber hinaus werden die aktualisierten Weiterleitungsregeln bei ihrer Übermittlung an die Kommunikationsgeräte entlang der ermittelten Pfade vorzugsweise ausgehend von einem Kommunikationsgerät an einem Endknoten des jeweiligen Pfades sukzessive (hop-by-hop) bis zu einem Kommunikationsgerät an einem Startknoten des jeweiligen Pfades verbreitet. Auf diese Weise kann ein konsistenter Roll-out von durch die Steuerungseinheiten vorgegebenen Weiterleitungsregeln für die Kommunikationsgeräte gewährleistet werden.

Entsprechend einer besonders bevorzugten Ausgestaltung der vorliegenden Erfindung ist das Kommunikationsnetz in mehrere Partitionen unterteilt, die vorgebbare Anteile an Systemressourcen von Kommunikationsgeräten umfassen, die der jeweiligen Partition zugeordnet sind. Die Steuerungseinheiten ermitteln dementsprechend bei Kommunikationsdienst-Anforderungen jeweils einen Pfad zwischen einem ersten Kommunikationsgerät an einem ersten Endknoten und einem zweiten Kommunikationsgerät an einem zweiten Endknoten über dritte Kommunikationsgeräte innerhalb der jeweiligen Partition. Die Partitionen sind insbesondere Network Slices und können mittels eines Engineering-Systems manuell durch einen Systemadministrator oder automatisiert festgelegt werden.

Darüber hinaus authentisieren sich die Steuerungseinheiten vorzugsweise gegenüber den zugeordneten Kommunikationsgeräten. Erst nach erfolgreicher Authentifizierung erhalten die Steuerungseinheiten Steuerungszugriff auf die zugeordneten Kommunikationsgeräte. Zur Authentifizierung können beispielsweise manuell bzw. durch einen Administrator an die Kommunikationsgeräte bereitgestellte öffentliche digitale Schlüssel der Steuerungseinheiten verwendet werden.

Die erfindungsgemäße Steuerungseinheit ist zur Durchführung eines Verfahrens entsprechend vorangehenden Ausführungen vorgesehen und dafür ausgestaltet sowie eingerichtet, Funktionen mehrerer zugeordneter Kommunikationsgeräte zu steuern. Außerdem ist die Steuerungseinheit dafür ausgestaltet und eingerichtet, jeweils Steuerungsverbindungen mit den zugeordneten Kommunikationsgeräten aufzubauen und über die Steuerungsverbindungen vorgegebene Weiterleitungsregeln an die zugeordneten Kommunikationsgeräte zu übermitteln. Des weiteren ist die Steuerungseinheit dafür ausgestaltet und eingerichtet, die zugeordneten Kommunikationsgeräte dazu zu veranlassen, empfangene Datagramme nur entsprechend den vorgegebenen Weiterleitungsregeln weiterzuleiten.

Erfindungsgemäß ist die Steuerungseinheit dafür ausgestaltet und eingerichtet, eine Kommunikationsverbindung zu einer redundanten Steuerungseinheit aufzubauen und eine Verwendung eines Spannbaum-Protokolls zur Weiterleitung von Datagrammen durch die zugeordneten Kommunikationsgeräte zu beenden. Darüber hinaus ist die Steuerungseinheit dafür ausgestaltet und eingerichtet, eine vollständige Topologie des Kommunikationsnetzes zu ermitteln und anhand der ermittelten Topologie Pfade zu den zugeordneten Kommunikationsgeräten sowie redundante Pfade zur redundanten Steuerungseinheit zu ermitteln. Ferner ist die Steuerungseinheit dafür ausgestaltet und eingerichtet, aus den ermittelten Pfaden aktualisierte Weiterleitungsregeln abzuleiten und zur Anwendung an die zugeordneten Kommunikationsgeräte zu übermitteln.

Das erfindungsgemäße Kommunikationsgerät ist zur Durchführung eines Verfahrens entsprechend vorangehenden Ausführungen vorgesehen und dafür ausgestaltet sowie eingerichtet, zumindest zwei zueinander redundanten Steuerungseinheiten zugeordnet zu werden. Außerdem ist das Kommunikationsgerät dafür ausgestaltet und eingerichtet, bei einem Netzbetriebsstart anhand von Absender-Adressen empfangener Datagramme jeweils selbständig Weiterleitungsregeln für weiterzuleitende Datagramme zu erstellen und mit weiteren Kommunikationsgeräten entsprechend einem Spannbann-Protokoll schleifenfreie Sicherungsschicht-Verbindungen aufzubauen. Des weiteren ist das Kommunikationsgerät dafür ausgestaltet und eingerichtet, anhand von Adressen bzw. Namen der zugeordneten Steuerungseinheiten jeweils Steuerungsverbindungen zu den zugeordneten Steuerungseinheiten aufzubauen und empfangene Datagramme nur entsprechend durch die zugeordneten Steuerungseinheiten über die Steuerungsverbindungen vorgegebenen Weiterleitungsregeln weiterzuleiten. Darüber hinaus ist das Kommunikationsgerät dafür ausgestaltet und eingerichtet, nach Aufbau einer Kommunikationsverbindung zwischen den zueinander redundanten Steuerungseinheiten eine Verwendung des Spannbaum-Protokolls zur Weiterleitung von Datagrammen zu beenden.

Die vorliegende Erfindung wird nachfolgend an einem Ausführungsbeispiel anhand der Zeichnung näher erläutert. Es zeigt
- Figur 1: ein mehrere Kommunikationsgeräte und diesen zugeordnete Steuerungseinheiten umfassendes Kommunikationsnetz eines industriellen Automatisierungssystems,
- Figur 2: eine Darstellung eines ersten Teils eines Ablaufs für ein Hochfahren des in Figur 1 dargestellten Kommunikationsnetzes,
- Figur 3: eine Darstellung eines zweiten Teils des Ablaufs für das Hochfahren des in Figur 1 dargestellten Kommunikationsnetzes,
- Figur 4: eine Darstellung eines Ablaufs für eine Bearbeitung von Kommunikationsdienst-Anforderungen innerhalb des in Figur 1 dargestellten Kommunikationsnetzes.

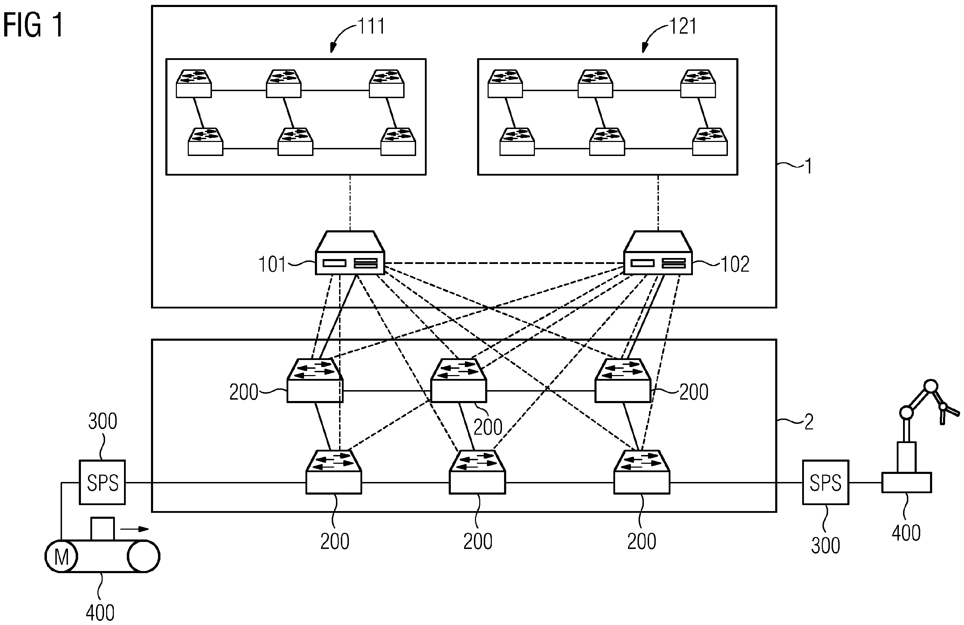

Das in Figur 1 dargestellte Kommunikationsnetz eines industriellen Automatisierungssystems umfasst mehrere Kommunikationsgeräte 200 und mehrere Steuerungseinheiten 101, 102. Die Kommunikationsgeräte 200 können beispielsweise Switche, Router oder Firewalls sein und zum Anschluss von speicherprogrammierbaren Steuerungen 300 oder Eingabe/Ausgabe-Einheiten (I/O-Module) des industriellen Automatisierungssystems dienen. Speicherprogrammierbare Steuerungen 300 umfassen typischerweise jeweils ein Kommunikationsmodul, eine Zentraleinheit sowie zumindest eine Eingabe/Ausgabe-Einheit und stellen somit ebenfalls Kommunikationsgeräte dar. Eingabe/Ausgabe-Einheiten können grundsätzlich auch als dezentrale Peripheriemodule ausgestaltet sein, die entfernt von einer speicherprogrammierbaren Steuerung angeordnet sind.

Über das Kommunikationsmodul ist eine speicherprogrammierbare Steuerung 300 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 300 und einer durch die speicherprogrammierbare Steuerung 300 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 300 sind im vorliegenden Ausführungsbeispiel über ein Rückwandbus-System miteinander verbunden.

Die Kommunikationsgeräte 200 sind im vorliegenden Ausführungsbeispiel einem Software Defined Network zugeordnet, das eine als Control Plane bezeichnete Kommunikationssteuerungsebene 1 und eine als Data Plane bezeichnete Datenübermittlungsebene 2 umfasst. Die Steuerungseinheiten 101, 102 als SDN-Controller sind der Control Plane zugeordnet, während die Kommunikationsgeräte 200 der Data Plane zugeordnet sind. Durch die Steuerungseinheiten 101, 102 werden beispielsweise Flow-Tabellen für Switche oder Router vorgegeben, aus denen Routing-Regeln bzw. Forwarding-Regeln für der jeweiligen Steuerungseinheit 101, 102 zugeordnete Kommunikationsgeräte 200 abgeleitet werden.

Im vorliegenden Ausführungsbeispiel sind jedem Kommunikationsgerät 200 jeweils eine Haupt-Steuerungseinheit 101 und eine Reserve-Steuerungseinheit 102 zugeordnet. Die Haupt-Steuerungseinheit 101 und die Reserve-Steuerungseinheit 102 sind zueinander redundant. Insbesondere übernimmt die Haupt-Steuerungseinheit 101 dabei eine Master-Rolle, während der Reserve-Steuerungseinheit 102 eine Slave-Rolle zugewiesen wird. Die Steuerungseinheiten 101, 102 authentisieren sich vorzugsweise gegenüber den zugeordneten Kommunikationsgeräten 200 und erhalten erst nach erfolgreicher Authentifizierung Steuerungszugriff auf die zugeordneten Kommunikationsgeräte 200.

Insbesondere in großen Kommunikationsnetzen mit einer Vielzahl von Steuerungseinheiten kann eine Zuordnung zwischen den Steuerungseinheiten und den Kommunikationsgeräten beispielsweise entsprechend First-Come-First-Serve- oder Round-Robin-Prinzip oder durch manuelle Selektion erfolgen. In Abhängigkeit von anwendungs- oder einzelfallspezifischen Redundanzanforderungen können auch mehr als eine Reserve-Steuerungseinheit vorgesehen werden. Darüber hinaus sollte das Kommunikationsnetz insbesondere für eine Realisierung redundanter Steuerungspfade einen hinreichenden Vermaschungsgrad bzw. zumindest eine Ring-Topologie aufweisen.

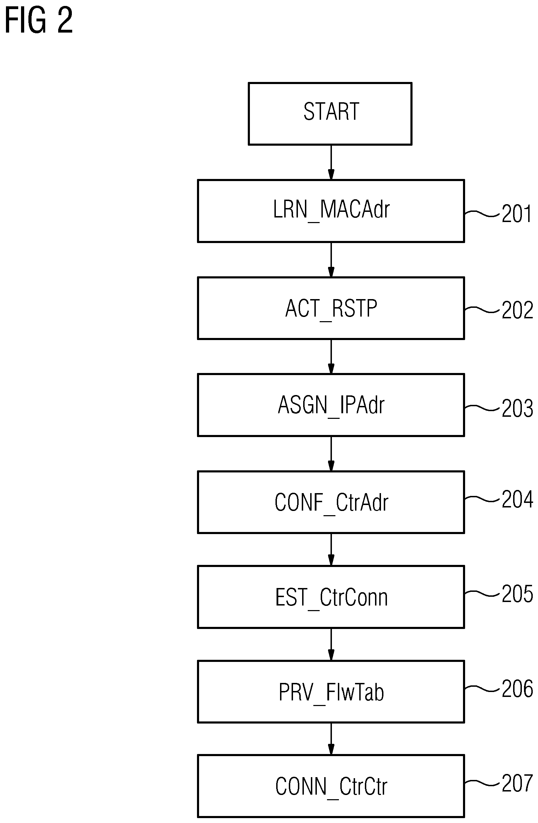

Bei einem Hochfahren bzw. Betriebsstart des Kommunikationsnetzes erstellen die Kommunikationsgeräte 200 entsprechend Schritt 201 des in Figur 2 dargestellten Ablaufs (erster Teil) anhand von Absender-MAC-Adressen empfangener Frames auf OSI-Schicht 2 jeweils selbständig Weiterleitungsregeln für weiterzuleitende Frames. Diese Weiterleitungsregeln werden aus Einträgen in Quell-Adress-Tabellen der Kommunikationsgeräte 200 abgeleitet und somit selbständig durch die Kommunikationsgeräte 200 gelernt. Außerdem bauen die Kommunikationsgeräte 200 im vorliegenden Ausführungsbeispiel entsprechend Rapid Spanning Tree Protocol eine schleifenfreie logische Netztopologie auf (Schritt 202). Dabei werden Ports der Kommunikationsgeräte, die ansonsten zu Schleifen führen würden, in einen blockierten Zustand versetzt, in dem eine Weiterleitung von Frames mit Nutzdaten unterbunden wird. Weist das Kommunikationsnetz beispielsweise eine physikalische Ring-Topologie auf, würde durch Blockieren der Weiterleitung an einem Port eines Kommunikationsgeräts innerhalb dieses Kommunikationsnetzes eine logische Linien-Topologie erzeugt, die also schleifenfrei ist.

Nach Aufbau einer schleifenfreien logischen Netztopologie können die Kommunikationsgeräte 200 entsprechend Schritt 203 mit jeweils einer IP-Adresse konfiguriert werden. Die IP-Adressen können beispielsweise durch die Kommunikationsgeräte 200 mittels DHCPDISCOVER-Broadcast-Anfragen von DHCP-Serverkomponenten der Steuerungseinheiten 101, 102 angefordert werden. Aufgrund der nun schleifenfreien logischen Netztopologie führen DHCPDISCOVER-Broadcast-Anfragen der Kommunikationsgeräte 200 nicht zu Broadcast-Stürmen. In entsprechender Weise gilt dies auch für eine Verbreitung von Router Advertisements bei einer selbständigen Generierung von IPv6-Adressen durch die Kommunikationsgeräte 200 entsprechend Stateless Address Autoconfiguration als alternativer Möglichkeit zur Adress-Konfiguration.

Eine DHCP-basierten Zuweisung insbesondere von IPv4-Adressen an die Kommunikationsgeräte 200 erfolgt vorzugsweise aus überlappungsfreien Steuerungseinheit-individuellen Adressbereichen, die den DHCP-Serverkomponenten der Steuerungseinheiten jeweils zugeordnet sind. Umfasst das Kommunikationsnetz insbesondere eine erste Steuerungseinheit mit der IP-Adresse 192.168.0.1, eine zweite Steuerungseinheit mit der IP-Adresse 192.168.0.2 und eine dritte Steuerungseinheit mit der IP-Adresse 192.168.0.3,
a) weist die erste Steuerungseinheit beispielsweise IP-Adressen zwischen 192.168.0.20/24 und 192.168.0.49/24 an ihr zugeordnete Kommunikationsgeräte zu,
b) weist die zweite Steuerungseinheit beispielsweise IP-Adressen zwischen 192.168.0.50/24 und 192.168.0.79/24 an ihr zugeordnete Kommunikationsgeräte zu,
c) weist die dritte Steuerungseinheit beispielsweise IP-Adressen zwischen 192.168.0.80/24 und 192.168.0.109/24 an ihr zugeordnete Kommunikationsgeräte zu.

Nach Konfiguration der Kommunikationsgeräte 200 mit jeweils einer IP-Adresse werden durch eine Bootstrapping-Komponente Informationen über IP-Adressen oder DNS-Namen Steuerungseinheiten 101, 102 jeweils an die Kommunikationsgeräte 200 übermittelt und dort entsprechend Schritt 204 in Konfigurationsdaten der Kommunikationsgeräte 200 gespeichert. Anhand der IP-Adressen bzw. DNS-Namen der Steuerungseinheiten 101, 102 bauen die Kommunikationsgeräte 200 im vorliegenden Ausführungsbeispiel entsprechend Schritt 205 jeweils TCP-Steuerungsverbindungen zu den Steuerungseinheiten 101, 102 auf. Die Steuerungseinheiten 101, 102 übermitteln über die TCP-Steuerungsverbindungen vorgegebene Weiterleitungsregeln an die zugeordneten Kommunikationsgeräte 200 (Schritt 206). Die vorgegebenen Weiterleitungsregeln werden zunächst aus den durch die Kommunikationsgeräte selbständig erstellten Weiterleitungsregeln abgeleitet. Jedoch werden diese initialen Weiterleitungsregeln bereits explizit durch die Steuerungseinheiten vorgegeben, so dass sie später konsistent durch die Steuerungseinheiten angepasst werden können. Die Kommunikationsgeräte 200 leiten empfangene Datagramme fortan nur noch entsprechend den explizit durch die Steuerungseinheiten vorgegebenen Weiterleitungsregeln weiter. Der in Figur 2 dargestellte erste Teil des Ablaufs für das Hochfahren des Kommunikationsnetzes wird durch einen Aufbau einer Kommunikationsverbindung zwischen den zueinander redundanten Steuerungseinheiten 101, 102 abgeschlossen (Schritt 207).

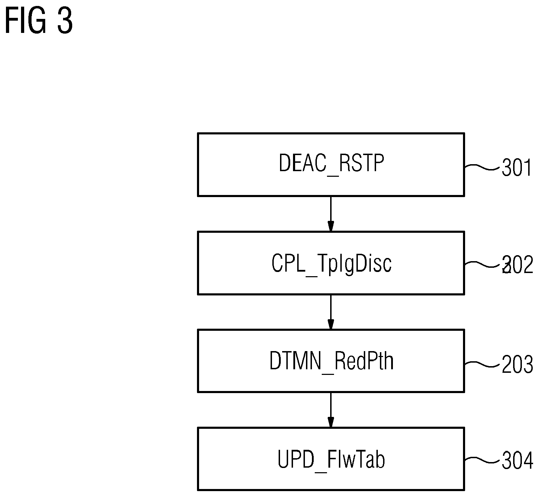

Entsprechend dem in Figur 3 dargestellten anschließenden zweiten Teil des Ablaufs für das Hochfahren des Kommunikationsnetzes wird nach Aufbau der Kommunikationsverbindung zwischen den Steuerungseinheiten 101, 102 eine Verwendung des Rapid Spanning Tree Protocol zur Weiterleitung von Datagrammen beendet (Schritt 301). Damit können die Steuerungseinheiten 101, 102 in Schritt 302 anschließend eine vollständige Topologie des Kommunikationsnetzes ermitteln, ohne dass dies durch blockierte Ports der Kommunikationsgeräte 200 behindert wird. Anhand der ermittelten Topologie ermitteln die Steuerungseinheiten 101, 102 Pfade zwischen den Kommunikationsgeräten 200 und den zugeordneten Steuerungseinheiten 101, 102 sowie redundante Pfade zwischen den zueinander redundanten Steuerungseinheiten 101, 102 (Schritt 303). Zum Abschluss des Hochfahrens des Kommunikationsnetzes leiten die Steuerungseinheiten 101, 102 entsprechend Schritt 304 aus den ermittelten Pfaden aktualisierte Weiterleitungsregeln ab und übermitteln diese zur Anwendung an die zugeordneten Kommunikationsgeräte 200.

Im vorliegen Ausführungsbeispiel wird eine Weiterleitung von Datagrammen entsprechend den für die Kommunikationsgeräte 200 vorgegebenen Weiterleitungsregeln zwischen Beendigung der Verwendung des Rapid Spanning Tree Protocol (Schritt 301) und Übermittlung der aktualisierten Weiterleitungsregeln an die Kommunikationsgeräte 200 (Schritt 304) ausgesetzt. Auf diese Weise können etwaige Broadcast-Stürme nach Beendigung der Verwendung des Rapid Spanning Tree Protocol verhindert werden.

Die aktualisierten Weiterleitungsregeln werden bei ihrer Übermittlung an die Kommunikationsgeräte 200 vorzugsweise hop-by-hop entlang der ermittelten Pfade ausgehend von einem Kommunikationsgerät an einem Endknoten des jeweiligen Pfades sukzessive bis zu einem Kommunikationsgerät an einem Startknoten des jeweiligen Pfades verteilt. Damit kann ein konsistenter Roll-out der aktualisierten Weiterleitungsregeln an die Kommunikationsgeräte 200 realisiert werden.

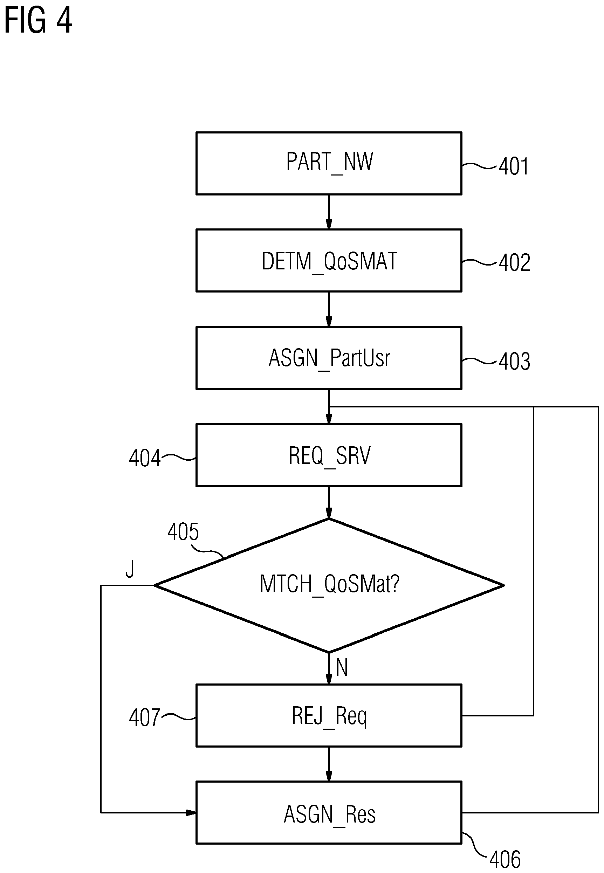

Entsprechend Schritt 401 des in Figur 4 dargestellten Ablaufs für eine Bearbeitung von Kommunikationsdienst-Anforderungen wird das Kommunikationsnetz in mehrere Partitionen unterteilt. Die Partitionen umfassen jeweils mehrere Endknoten als Dienstzugangspunkte und vorgebbare Anteile an Systemressourcen von Kommunikationsgeräten, die der jeweiligen Partition zugeordnet sind. Im vorliegenden Ausführungsbeispiel sind die Partitionen Network Slices, die mittels eines Engineering-Systems manuell durch einen Systemadministrator oder automatisiert festgelegt werden. Für jede Steuerungseinheit ist jeweils eine separate Ressourcensicht 111, 121 mit den Anteilen an Systemressourcen vorgesehen (siehe Figur 1).

Für eine Datenübermittlung innerhalb der Partitionen werden vorzugsweise jeweils Endknotenpaar-weise und richtungsabhängig garantierbare Dienstgüteparameter ermittelt, die in einer mehrdimensionalen Dienstgüteparameter-Matrix je Partition abgebildet werden (Schritt 402). Dienstgüteparameter können beispielsweise Bandbreite, Latenz, Verfügbarkeit, Redundanz bzw. in einem deterministischen Zyklus zur Verfügung stehende Verbindungen umfassen. Entsprechend Schritt 403 wird jede Partition zusammen mit den garantierbaren Dienstgüteparametern jeweils eindeutig zu einem Benutzer zugeordnet. Durch die jeweils zugeordnete Partition werden potentiell verfügbare Systemressourcen bzw. Berechtigungen für die Benutzer festgelegt.

Im Rahmen von Benutzer-seitigen Kommunikationsdienst-Anforderungen entsprechend Schritt 404 werden Dienstgüteparameter zusätzlich zu Endknotenpaaren spezifiziert. Angeforderte Kommunikationsdienste werden dabei jeweils einer Partition fest zugeordnet. Die Steuerungseinheiten ermitteln für Benutzerseitige Kommunikationsdienst-Anforderungen innerhalb einer Partition jeweils einen Pfad zwischen einem ersten Kommunikationsgerät an einem ersten Endknoten und einem zweiten Kommunikationsgerät an einem zweiten Endknoten über dritte Kommunikationsgeräte innerhalb der dem jeweiligen Benutzer zugeordneten Partition. Auf dieser Basis werden die Benutzer-seitigen Kommunikationsdienst-Anforderungen zur Überprüfung gegen die Dienstgüteparameter-Matrix der jeweiligen Partition abgeglichen. Somit können die Steuerungseinheiten entsprechend Schritt 405 überprüfen, ob entlang der ermittelten Pfade innerhalb der dem jeweiligen Benutzer zugeordneten Partition während einer geplanten Nutzungsdauer jeweils erforderliche Systemressourcen verfügbar sind. Insbesondere überprüfen die Steuerungseinheiten bei Kommunikationsdienst-Anforderungen jeweils anhand von Systemrichtlinien (System Policies), ob Systemressourcen für den jeweiligen Benutzer innerhalb der ihm zugeordneten Partition begrenzt sind bzw. ob der Benutzer zur Nutzung von Datenströmen mit Echtzeit-Anforderungen berechtigt ist.

Bei einem positiven Überprüfungsergebnis reservieren die Steuerungseinheiten entsprechend Schritt 406 für die Kommunikationsdienst-Anforderungen jeweils erforderliche Systemressourcen und steuern Routing- oder Switching-Funktionen der dritten Kommunikationsgeräte entsprechend den ermittelten Pfaden. Dagegen wird bei einem negativen Überprüfungsergebnis eine Warnung signalisiert (Schritt 407). Anschließend erfolgt in beiden Fällen eine Entgegennahme neuer Benutzer-seitiger Kommunikationsdienst-Anforderungen (Schritt 404).

## Patentansprüche

1. Verfahren zum Betrieb eines mehrere Kommunikationsgeräte umfassenden Kommunikationsnetzes eines industriellen Automatisierungssystems, bei dem
- mehrere Steuerungseinheiten (101, 102) Funktionen mehrerer Kommunikationsgeräte (200) steuern, wobei jedem Kommunikationsgerät (200) jeweils zumindest zwei zueinander redundante Steuerungseinheiten (101, 102) zugeordnet sind,
- die Kommunikationsgeräte (200) bei einem Start des Betriebs des Kommunikationsnetzes anhand von Absender-Adressen empfangener Datagramme jeweils selbständig Weiterleitungsregeln für weiterzuleitende Datagramme erstellen und entsprechend einem Spannbann-Protokoll untereinander schleifenfreie Sicherungsschicht-Verbindungen aufbauen,
- nach Konfiguration der Kommunikationsgeräte (200) mit jeweils einer Vermittlungsschicht-Adresse Informationen über Adressen und/oder Namen der zugeordneten Steuerungseinheiten (101, 102) an die Kommunikationsgeräte (200) übermittelt werden,
- die Kommunikationsgeräte (200) anhand der Adressen und/oder Namen der zugeordneten Steuerungseinheiten jeweils Steuerungsverbindungen zu den zugeordneten Steuerungseinheiten (101, 102) aufbauen,
- die Steuerungseinheiten (101, 102) über die Steuerungsverbindungen vorgegebene Weiterleitungsregeln an die zugeordneten Kommunikationsgeräte (200) übermitteln,
- die Kommunikationsgeräte (200) empfangene Datagramme nur entsprechend den vorgegebenen Weiterleitungsregeln weiterleiten,
- nach Aufbau von Kommunikationsverbindungen zwischen jeweils zueinander redundanten Steuerungseinheiten (101, 102) eine Verwendung des Spannbaum-Protokolls zur Weiterleitung von Datagrammen beendet wird,
- die Steuerungseinheiten (101, 102) anschließend eine vollständige Topologie des Kommunikationsnetzes ermitteln,
- die Steuerungseinheiten (101, 102) anhand der ermittelten Topologie Pfade zwischen den Kommunikationsgeräten (200) und den zugeordneten Steuerungseinheiten (101, 102) sowie redundante Pfade zwischen den zueinander redundanten Steuerungseinheiten (101, 102) ermitteln,
- die Steuerungseinheiten (101, 102) aus den ermittelten Pfaden aktualisierte Weiterleitungsregeln ableiten und zur Anwendung an die zugeordneten Kommunikationsgeräte (200) übermitteln.

2. Verfahren nach Anspruch 1,
bei dem die Kommunikationsgeräte (200) einem Software Defined Network zugeordnet sind, das eine als Control Plane bezeichnete Kommunikationssteuerungsebene und eine als Data Plane bezeichnete Datenübermittlungsebene umfasst, bei dem die Steuerungseinheiten (101, 102) der Control Plane zugeordnet sind und bei dem die Kommunikationsgeräte (200) der Data Plane zugeordnet sind.

3. Verfahren nach Anspruch 2,
bei dem die Kommunikationsgeräte Router und/oder Switches umfassen und bei dem durch die Steuerungseinheiten (101, 102) Flow-Tabellen vorgebbar sind, aus denen Routing-Tabellen und/oder Forwarding-Tabellen für die den Steuerungseinheiten zugeordneten Kommunikationsgeräte abgeleitet werden.

4. Verfahren nach einem der Ansprüche 1 bis 3,
bei dem die Steuerungseinheiten (101, 102) für Kommunikationsdienst-Anforderungen jeweils zumindest einen verfügbaren Pfad zwischen einem ersten Kommunikationsgerät an einem ersten Endknoten und einem zweiten Kommunikationsgerät an einem zweiten Endknoten über dritte Kommunikationsgeräte ermitteln und bei dem die Steuerungseinheiten (101, 102) für die Kommunikationsdienst-Anforderungen jeweils bei einem positiven Ermittlungsergebnis erforderliche Systemressourcen reservieren und Routing- oder Switching-Funktionen der dritten Kommunikationsgeräte entsprechend den ermittelten Pfaden steuern.

5. Verfahren nach einem der Ansprüche 1 bis 4,
bei dem jedem Kommunikationsgerät zumindest eine Haupt-Steuerungseinheit und eine Reserve-Steuerungseinheit zugeordnet ist.

6. Verfahren nach einem der Ansprüche 1 bis 5,
bei dem die durch die Kommunikationsgeräte selbständig erstellten Weiterleitungsregeln aus Einträgen in Quell-Adress-Tabellen der Kommunikationsgeräte abgeleitet werden.

7. Verfahren nach einem der Ansprüche 1 bis 6,
bei dem die vorgegebenen Weiterleitungsregeln zunächst aus den durch die Kommunikationsgeräte selbständig erstellten Weiterleitungsregeln abgeleitet werden.

8. Verfahren nach einem der Ansprüche 1 bis 7,
bei dem die über die Steuerungsverbindungen übermittelten Weiterleitungsregeln durch die Steuerungseinheiten vorgegeben werden.

9. Verfahren nach einem der Ansprüche 1 bis 8,
bei dem zwischen Beendigung der Verwendung des Spannbaum-Protokolls zur Weiterleitung von Datagrammen und Übermittlung der aktualisierten Weiterleitungsregeln an die Kommunikationsgeräte keine Weiterleitung von Datagrammen durch die Kommunikationsgeräte entsprechend den vorgegebenen Weiterleitungsregeln erfolgt.

10. Verfahren nach einem der Ansprüche 1 bis 9,
bei dem die aktualisierten Weiterleitungsregeln bei ihrer Übermittlung an die Kommunikationsgeräte entlang der ermittelten Pfade ausgehend von einem Kommunikationsgerät an einem Endknoten des jeweiligen Pfades sukzessive bis zu einem Kommunikationsgerät an einem Startknoten des jeweiligen Pfades verbreitet werden.

11. Verfahren nach einem der Ansprüche 1 bis 10,
bei dem die Vermittlungsschicht-Adressen durch DHCP-Serverkomponenten der Steuerungseinheiten aus überlappungsfreien Steuerungseinheit-individuellen Adressbereichen an die Kommunikationsgeräte zugewiesen werden.

12. Verfahren nach einem der Ansprüche 1 bis 11,
bei dem das Kommunikationsnetz in mehrere Partitionen unterteilt ist, die vorgebbare Anteile an Systemressourcen von Kommunikationsgeräten umfassen, die der jeweiligen Partition zugeordnet sind, und bei dem die Steuerungseinheiten bei Kommunikationsdienst-Anforderungen innerhalb der jeweiligen Partition jeweils einen Pfad zwischen einem ersten Kommunikationsgerät an einem ersten Endknoten und einem zweiten Kommunikationsgerät an einem zweiten Endknoten über dritte Kommunikationsgeräte ermitteln.

13. Verfahren nach einem der Ansprüche 1 bis 12,
bei dem sich die Steuerungseinheiten (101, 102) gegenüber den zugeordneten Kommunikationsgeräten (200) authentisieren und bei dem die Steuerungseinheiten erst nach erfolgreicher Authentifizierung Steuerungszugriff auf die zugeordneten Kommunikationsgeräte erhalten.

14. Steuerungseinheit zur Durchführung eines Verfahrens nach einem der Ansprüche 1 bis 13, die dafür ausgestaltet und eingerichtet ist,
- Funktionen mehrerer zugeordneter Kommunikationsgeräte (200) zu steuern,
- jeweils Steuerungsverbindungen mit den zugeordneten Kommunikationsgeräten aufzubauen,
- über die Steuerungsverbindungen vorgegebene Weiterleitungsregeln an die zugeordneten Kommunikationsgeräte zu übermitteln,
- die zugeordneten Kommunikationsgeräte dazu zu veranlassen, empfangene Datagramme nur entsprechend den vorgegebenen Weiterleitungsregeln weiterzuleiten,
- eine Kommunikationsverbindung zu einer redundanten Steuerungseinheit aufzubauen,
- eine Verwendung eines Spannbaum-Protokolls zur Weiterleitung von Datagrammen durch die zugeordneten Kommunikationsgeräte zu beenden,
- eine vollständige Topologie des Kommunikationsnetzes zu ermitteln,
- anhand der ermittelten Topologie Pfade zu den zugeordneten Kommunikationsgeräten sowie redundante Pfade zur redundanten Steuerungseinheit zu ermitteln,
- aus den ermittelten Pfaden aktualisierte Weiterleitungsregeln abzuleiten und zur Anwendung an die zugeordneten Kommunikationsgeräte zu übermitteln.

15. Kommunikationsgerät zur Durchführung eines Verfahrens nach einem der Ansprüche 1 bis 13, das dafür ausgestaltet und eingerichtet ist,
- zumindest zwei zueinander redundanten Steuerungseinheiten zugeordnet zu werden,
- bei einem Netzbetriebsstart anhand von Absender-Adressen empfangener Datagramme jeweils selbständig Weiterleitungsregeln für weiterzuleitende Datagramme zu erstellen und mit weiteren Kommunikationsgeräten entsprechend einem Spannbann-Protokoll schleifenfreie Sicherungsschicht-Verbindungen aufzubauen,
- anhand von Adressen und/oder Namen der zugeordneten Steuerungseinheiten jeweils Steuerungsverbindungen zu den zugeordneten Steuerungseinheiten aufzubauen,
- empfangene Datagramme nur entsprechend durch die zugeordneten Steuerungseinheiten über die Steuerungsverbindungen vorgegebenen Weiterleitungsregeln weiterzuleiten,
- nach Aufbau einer Kommunikationsverbindung zwischen den zueinander redundanten Steuerungseinheiten eine Verwendung des Spannbaum-Protokolls zur Weiterleitung von Datagrammen zu beenden.
